# EUROPEAN PATENT APPLICATION

(11) **EP 1 083 679 A1**
(43) Date of publication of application: **14.03.2001**
(21) Application number: 00911420.8
(22) Date of filing: 28.03.2000
(51) Int. Cl.: H04B 7/06, H04B 7/08, H04B 7/26, H04B 1/04, H04B 1/40, H04L 27/00, H03M 13/27

(54) **TRANSMITTER, RECEIVER, AND TRANSMITTING/RECEIVING METHOD**

(30) Priority: 31.03.1999 JP 9398499; 29.09.1999 JP 27584599
(71) Applicant: MATSUSHITA ELECTRIC INDUSTRIAL CO., LTD., Kadoma-shi, Osaka 571-8501 (JP)
(72) Inventor: KITAGAWA, Keiichi, Yokosuka-shi, Kanagawa 239-0847 (JP); SAITO, Yoshiko, Yokosuka-shi, Kanagawa 239-0806 (JP); UESUGI, Mitsuru, Yokosuka-shi, Kanagawa 238-0048 (JP)
(74) Representative: Grünecker, Kinkeldey, Stockmair & Schwanhäusser Anwaltssozietät
(86) International application number: JP0001907
(87) International publication number: WO0060765

(57) **Abstract**

In transmission apparatus 100, an error correction coder 101 performs error correction coding of a transmission data, next, an interleave section 102 performs interleave processing of the transmission data, subsequently, modulator 103 modulates the transmission data, that is then branched into a plurality of signals. Multipliers 106, and 107 multiply branched respective signals by respective different time-variant factors which are changed temporally, generated from time-variant factor generators 104, and 105, then transmitting respective signals after multiplication from a plurality of antennas 108, and 109. According to the above processing, it is capable of ensuring required error correction performance under low speed fading condition and limited interleave length, and it is capable of overcoming the problems included in the transmission switching diversity so that the whole apparatus does not become large size, and without bringing increase of the dissipation power.

## Description

### Technical Field

The present invention relates to a transmission apparatus, a reception apparatus and a transmission-reception method employed in a mobile communication system.

### Background

In the mobile communication system, when error occurs in a radio propagation path, a code processing is performed, that is error correction code processing. When such the code processing is performed in the reception side, the code processing is called as Forward Error Correction (FEC). Further, generally, the more the error occurs at random, the more the error correction code processing has high corrected effect. So, the transmission side performs an interleave processing on the transmission data. The interleave processing is that transmission order of the transmission data is reversed in accordance with predetermined order beforehand. In the meantime, the reception side performs a deinterleave processing on the reception data. The deinterleave processing is that the order of the reception data is returned to the original order before interleave processing. Due to the interleave/deinterleave processing, improvement of error correction performance is schemed with burst error dissipated.

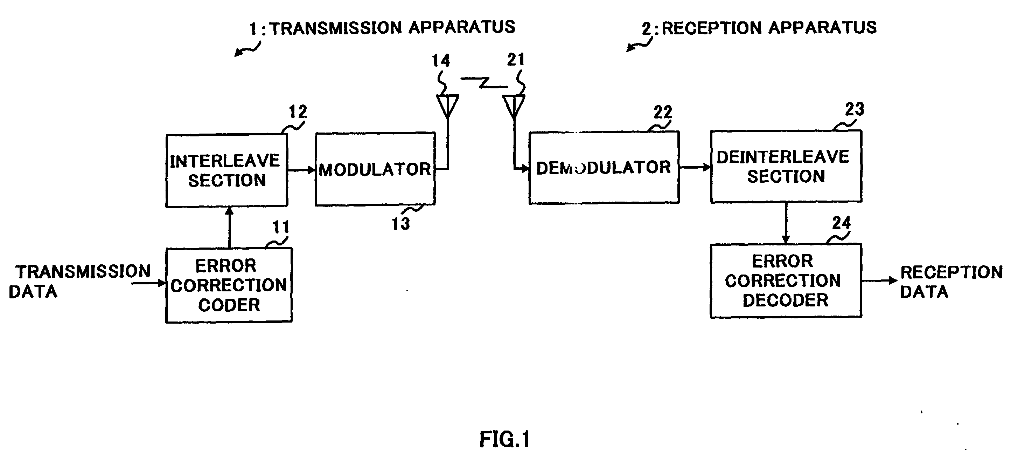

FIG. 1 is a block diagram indicating a configuration of the conventional transmission apparatus and reception apparatus.

The transmission apparatus 1 indicated in FIG. 1 is provided to be configured with an error correction coder 11, an interleave section 12, a modulator 13, and an antenna 14. The reception apparatus 2 is provided to be configured with an antenna 21, a demodulator 22, a deinterleave section 23, and an error correction decoder 24.

In the transmission apparatus and the reception apparatus having such the configuration, the transmission data is subjected to error correction code processing at the error correction coder 11. The transmission data is subjected to interleave processing at the interleave section 12. Subsequently, the transmission data is modulated at the modulator 13 to be transmitted from the antenna 14.

For instance, when the transmission apparatus performs the error correction in every 100 symbols, firstly, the interleave section 12 holds data of 100 symbols in a buffer. The interleave section 12 reads the data symbol by symbol from among the data within the buffer. The interleave section 12 writes the read data to predetermined position in a memory corresponding to time length for 1000 symbols. Next, the interleave section 12 holds data 100 symbols in the buffer. The interleave section 12 reads the data symbol by symbol to write the data into position where does not fall on symbol position of the memory that is already written. Further, this operation is repeated until data of 1000 symbols are written into the memory. When the data of 1000 symbols are written in the memory, the transmission apparatus outputs the data from beginning of the memory.

The signal transmitted from the transmission apparatus 1 is received at the antenna 21 of the reception apparatus 2. The reception signal is demodulated at the demodulator 22. Subsequently, the order of the data is returned to original order at the deinterleave section 23. Then, the data is subjected to error correction processing at the error correction decoder 24, thus being taken out reception data.

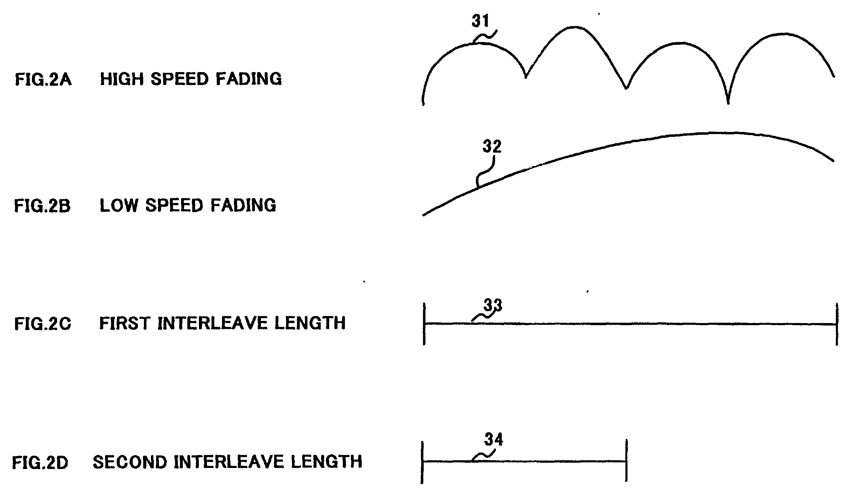

Next, there is described about relationship between fading of radio circuit and interleave length while employing FIG. 2A, FIG. 2B, FIG. 2C and FIG. 2D.

A quadrature axis of FIG. 2A and FIG. 2B is time, and longitudinal axis is reception amplitude. Further, curve 31 indicates waveform of radio signal on the occasion of high speed fading, in the meantime, curve 32 indicates waveform of radio signal on the occasion of the low speed fading. Further, a line segment 33 of FIG. 2C indicates a signal with long interleave length, and a line segment 34 of FIG. 2D indicates a signal with short interleave length.

Here, generally, the smaller the signal's reception amplitude, the more the error rate becomes high, thus burst error is easy to occur at a part of a valley of fading. In the case of high speed fading, the signals 33, and 34 of FIG. 2C, and FIG. 2D, both cross over a plurality of hills and valleys of the waveform 31, therefore, even though burst error occurs at the part of the valley, the error is randomized due to effect of the interleave, thus it is capable of being expected high error correction effect.

However, in the case of low speed fading, error correction performance deteriorates. The signal 33 with long interleave length crosses over the hill and the valley of the waveform 32, therefore, effect of interleave can be effected. However, the whole of the signal 34 with short interleave length exists on the inside of the valley of the waveform 32, therefore, even though the signal 34 is subjected to the interleave processing, the error is randomized insufficiently. Thus, error correction performance deteriorates.

However, to lengthen interleave length prduces a plurality of problems that data delay is increased, and necessary memory capacity is increased. Accordingly, interleave length is limited according to system.

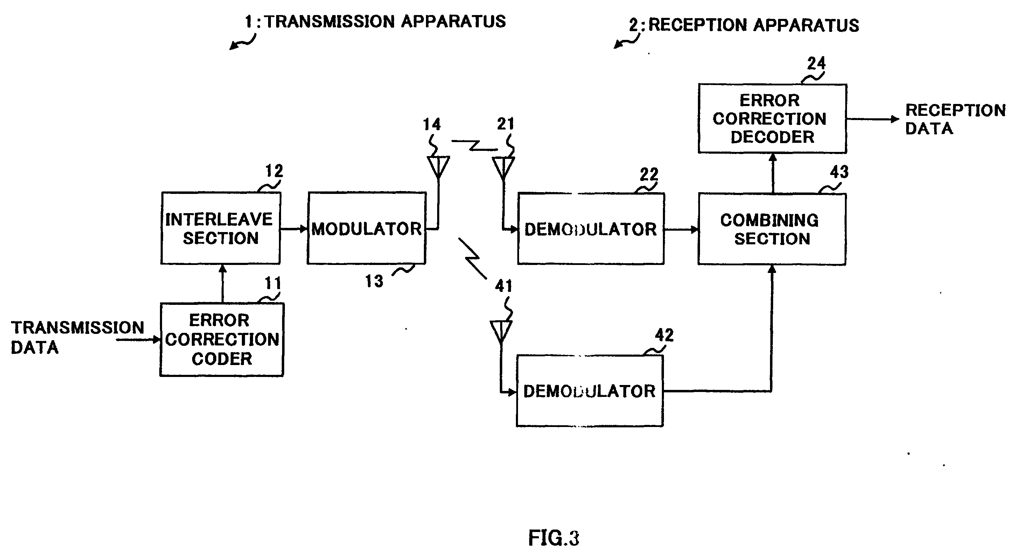

There is the diversity technique that is one method for improving this problem. FIG. 3 is one example in which 2-branch diversity is provided for a reception apparatus. Further, in FIG. 3, the same signs as FIG. 1 are added to common configuration parts of FIG. 3 to omit the description.

In FIG. 3, a transmission apparatus 1 has totally the same configuration as that of the above FIG. 1. In the meantime, a reception apparatus 2 is additionally provided with an antenna 41, a demodulator 42, and a combining section 43, in addition to FIG. 1.

The combining section 43 combines outputs of the demodulator 22 and the demodulator 42 to output to the deinterleave section 23. Combining method according to the combining section 43 is selective combining, equal gain combining, or maximum ratio combining or so forth.

According to such the method, the error rate is improved. Since the signals passed through two kinds of circuits of the antenna 14 and the antenna 21, as well as the antenna 14 and the antenna 41, are combined in favor of the reception apparatus 2, few poor circuit state occurs, thus the error rate is improved.

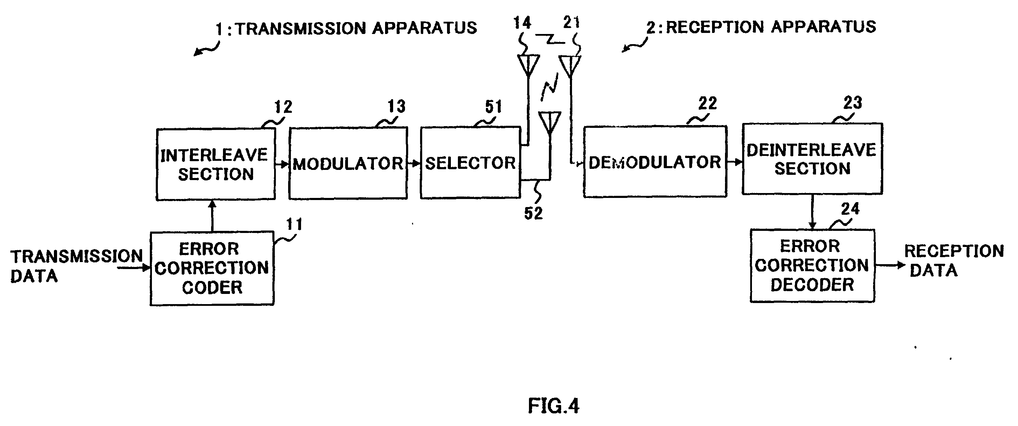

FIG. 4 is an example of transmission diversity. Namely, in this example the 2-branch diversity is provided for the transmission apparatus 1. Further, in FIG. 4, the same signs as FIG. 1 are added to the common configuration parts of FIG. 1 to omit the description.

In FIG. 4, the reception apparatus 2 is the totally same as that of the above FIG. 1. In the meantime, the transmission apparatus 1 is additionally provided with a selector 51, and an antenna 52, in addition to FIG. 1.

The selector 51 selects one antenna of the antenna 14 and the antenna 52 that enables the signal to be received in favor of the reception apparatus 2. The transmission apparatus transmits the signals from only the selected antenna.

For that reason, two kinds of circuits of the antenna 14 and the antenna 21 as well as the antenna 52 and the antenna 21 are capable of being formed. It is capable of always transmitting signals with advantageous circuit employed, therefore, few poor circuit state occurs, thus the error rate is improved.

However, when reception diversity is performed, two systems of radio sections are required while extending scale for performing combining processing and so forth, and phases of the two systems of radio sections should be synchronized with each other. Thereby, there is the problem that circuit is complicated, the circuit becomes large, and dissipation power is increased. These become particular problems to a portable terminal apparatus (portable telephone and so forth) which requires miniaturization of the apparatus and realization of long life battery.

Further, when transmission switching diversity is performed, selection of the optimum branch is difficult in FDD (Frequency Division Duplex), in particular, whose reverse frequency is different from forward frequency. Furthermore, in the transmission switching diversity, the transmission antenna is switched. There are problems that the switching of the transmission antenna causes burden of ramp control, lowering of transmission efficiency caused by guarded time insertion, performance deterioration of coherent detection in which a plurality of slots of pilot signal are employed in the reception side, and so forth.

Moreover, in cases where the transmission switching diversity and/or the frequency hopping (FH) is performed, circuit condition of signals received by the reception apparatus changes discontinuously, therefore, there is also the problem that result of previous slot can not be employed on the occasion of implementation of the AGC (Automatic Gain Control) and/or the circuit estimation.

### Disclosure of Invention

It is an object of the present invention to provide a transmission apparatus, a reception apparatus and transmission-reception method capable of exercising required error correction performance with limited interleave length in low speed fading, as stayed increase of dissipation power, and as maintained the whole apparatus size in non-large sized one.

The object is achieved in such a way that signals are subjected to error correction coding, and then, the signals are subjected to interleave processing, before being branched into a plurality of signals, subsequently signals being transmitted from a plurality of antennas while changing amplitudes of respective branched signals temporally.

### Brief Description of Drawings

FIG. 1 is a block diagram indicating a configuration of the conventional transmission apparatus and reception apparatus,
FIG. 2A is a view for describing relationship between fading of radio circuit and interleave length,
FIG. 2B is a view for describing relationship between fading of radio circuit and interleave length,
FIG. 2C is a view for describing relationship between fading of radio circuit and interleave length,
FIG. 2D is a view for describing relationship between fading of radio circuit and interleave length,
FIG. 3 is a block diagram indicating a configuration of the conventional transmission apparatus and reception apparatus,
FIG. 4 is a block diagram indicating a configuration of the conventional transmission apparatus and reception apparatus,
FIG. 5 is a block diagram indicating a configuration of a transmission apparatus and a reception apparatus concerning an embodiment 1 of the present invention,
FIG. 6 is a block diagram indicating a configuration of a transmission apparatus and a reception apparatus concerning an embodiment 2 of the present invention,
FIG. 7 is a block diagram indicating a configuration of a transmission apparatus and a reception apparatus concerning an embodiment 3 of the present invention,
FIG. 8 is a block diagram indicating a configuration of a transmission apparatus and a reception apparatus concerning an embodiment 4 of the present invention,
FIG. 9 is a block diagram indicating a configuration of a transmission apparatus and a reception apparatus concerning an embodiment 5 of the present invention,
FIG. 10 is a block diagram indicating a configuration of a transmission apparatus and a reception apparatus concerning an embodiment 6 of the present invention,
FIG. 11 is a block diagram indicating a configuration of a transmission apparatus and a reception apparatus concerning an embodiment 7 of the present invention,
FIG. 12 is a conception view indicating mobile communication system including a base station, an automobile telephone and a portable telephone concerning an embodiment 8 of the present invention,
FIG. 13 is a block diagram indicating a configuration of the base station concerning the embodiment 8 of the present invention, and
FIG. 14 is a block diagram indicating a configuration of the automobile telephone or the portable telephone concerning the embodiment 8 of the present invention.

### Best Mode for Carrying Out the Invention

Hereinafter, there will be described about embodiments of the present invention in detail referring to the accompanied drawings.

### (Embodiment 1)

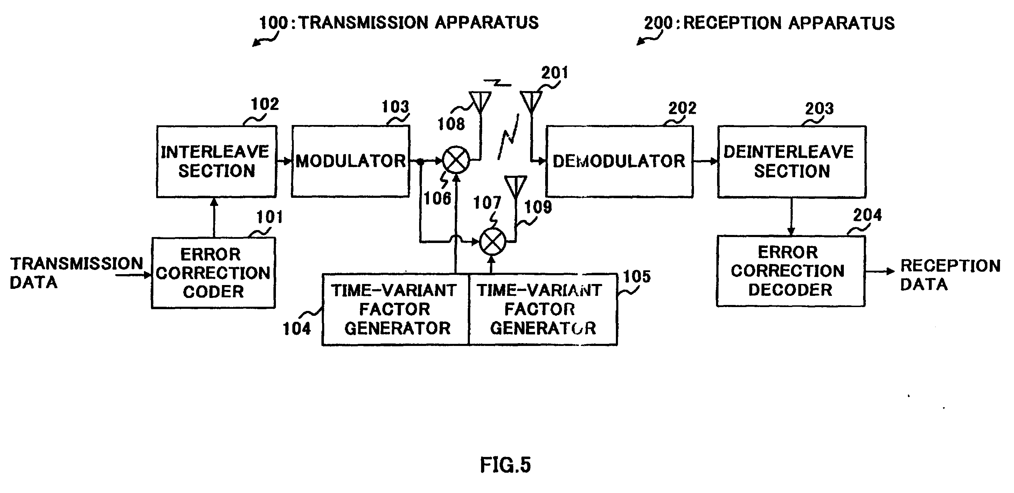

FIG. 5 is a block diagram indicating a configuration of a transmission apparatus and a reception apparatus concerning an embodiment 1 of the present invention.

A transmission apparatus 100 indicated in FIG. 5 is provided with an error correction coder 101, an interleave section 102, a modulator 103, time-variant factor generators 104, and 105, multipliers 106, and 107, and antennas 108, and 109. A reception apparatus 200 includes an antenna 201, a demodulator 202, a deinterleave section 203, and an error correction decoder 204.

Transmission data is subjected to error correction coding at the error correction coder 101, subsequently, the transmission data is subjected to interleave processing at the interleave section 102. Then, the transmission data is modulated at the modulator 103, before branching into two signals. Hereinafter, respective signals that are subjected to branching after modulation are taken to be "branch signal".

One side of the branch signal is multiplied by a signal generated from the time-variant factor generator 104 at the multiplier 106. The other side of the branch signal is multiplied by a signal generated from the time-variant factor generator 105 at the multiplier 107. Output signals according to these multipliers 106, and 107 are transmitted from the antennas 108, and 109 respectively.

Here, time-variant factors are generated from the time-variant factor generators 106, and 107. Both time-variant factors are different from each other. The time-variant factors are fluctuated temporally and continuously. According to this fluctuation, amplitudes of output signals of respective multipliers 108, and 109 are fluctuated temporally, and transmission level of respective antennas 110, and 111 are fluctuated continuously, therefore, pseudo-high-speed-fading that is the almost same state as that of the high speed fading is produced. Further, it is suitable that the time-variant factor is real number or complex number.

The signal transmitted from the transmission apparatus is received by the antenna 201 of the reception apparatus 200. The signal is demodulated at the demodulator 202, subsequently, being returned to original order before interleave processing at the deinterleave section 203. Then the signal is subjected to error correction processing at the error correction decoder 204, thus, reception data is reproduced.

Thus, in the transmission side, the transmission data is subjected to the above-described processing. Namely, the transmission data is subjected to the error correction coding before being subjected to the interleave processing. The transmission data is branched into a plurality of signals of data after modulation. Subsequently, the plurality of signals of the transmission data are multiplied by respective different time-variant factors which change temporally to be transmitted from a plurality of antennas. According to the above-described processing, even though the fading is low speed, since the pseudo-high-speed fading being the same state as that of the high speed fading is capable of being produced, when there is limitation on the interleave length, it is capable of exercising error correction effect sufficiently. Further, if speed of fluctuation caused by the time-variant factor is stayed in some degrees, there is scarcely any deterioration whose cause is high speed circuit fluctuation.

Further, since the antenna switching and/or the frequency switching is not executed, the signal received by the reception apparatus becomes continuous, it is capable of employing the result of the previous slot on the occasion of execution of AGC and/or circuit estimation in the reception apparatus.

Furthermore, there are problems to be solved in the transmission diversity. Namely, when transmission switching diversity is performed, selection of the optimum branch is difficult in FDD (Frequency Division Duplex), in particular, whose reverse frequency is different from forward frequency. Furthermore, in the transmission switching diversity, the transmission antenna is switched. There are problems that the switching of the transmission antenna causes burden of ramp control, lowering of transmission efficiency caused by guarded time insertion, performance deterioration of coherent detection in which a plurality of slots of pilot signal are employed in the reception side, and so forth. The present embodiment is capable of resolving these problems.

Moreover, in the present embodiment, when the transmission side is the base station, since the mobile station is not required to be reception diversity configuration, problems of increasing circuit scale and increasing dissipation power because of reception diversity configuration are solved.

### (Embodiment 2)

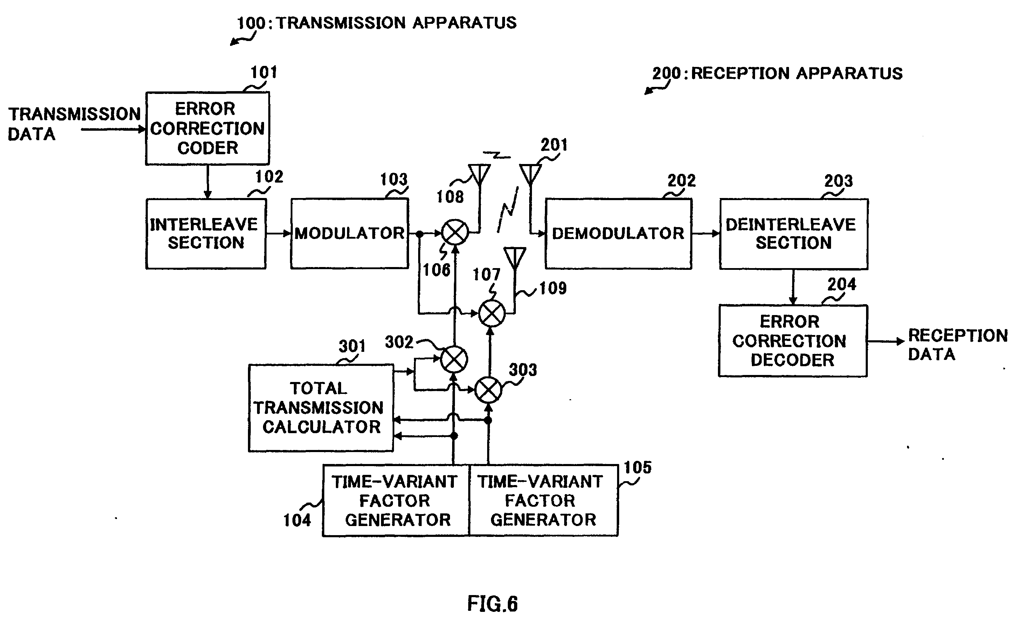

FIG. 6 is a block diagram indicating a configuration of a transmission apparatus and a reception apparatus concerning an embodiment 2 of the present invention. Further, in the transmission apparatus and the reception apparatus indicated in FIG. 6, the same signs as FIG. 5 are added to the common configuration parts of FIG. 6 to omit the description.

In FIG. 6, a reception apparatus is totally the same configuration as that of the above FIG. 5, in the meantime, a transmission apparatus 100 is additionally provided with a total transmission power calculator 301, and multipliers 302, and 303 in addition to FIG. 5.

The total transmission power calculator 301 detects respective time-variant factors generated from the time-variant factor generators 104, and 105. The total transmission power calculator 301 outputs a coefficient that sets the total of the both detected coefficients constant.

The respective multipliers 302, and 303 multiply the respective coefficients outputted from the total transmission power calculator 301 by the respective time-variant factors outputted from the time-variant factor generators 104, and 105. The output signals of the respective multipliers 302, and 303 are outputted to the respective multipliers 106, and 107.

Consequently, amplitudes of the output signals of the respective multipliers 106, and 107 are changed temporally, and transmission levels of the respective antennas 108, and 109 are changed continuously. Moreover, since the total of the respective time-variant factors become constant, also the total of the transmission levels of respective antennas 108, and 109 become constant.

Thus, due to control for rendering the total of the time-variant factor constant, thus enabling the total of the transmission levels of the respective antennas to be constant, therefore it is capable of avoiding increase of dynamic range.

### (Embodiment 3)

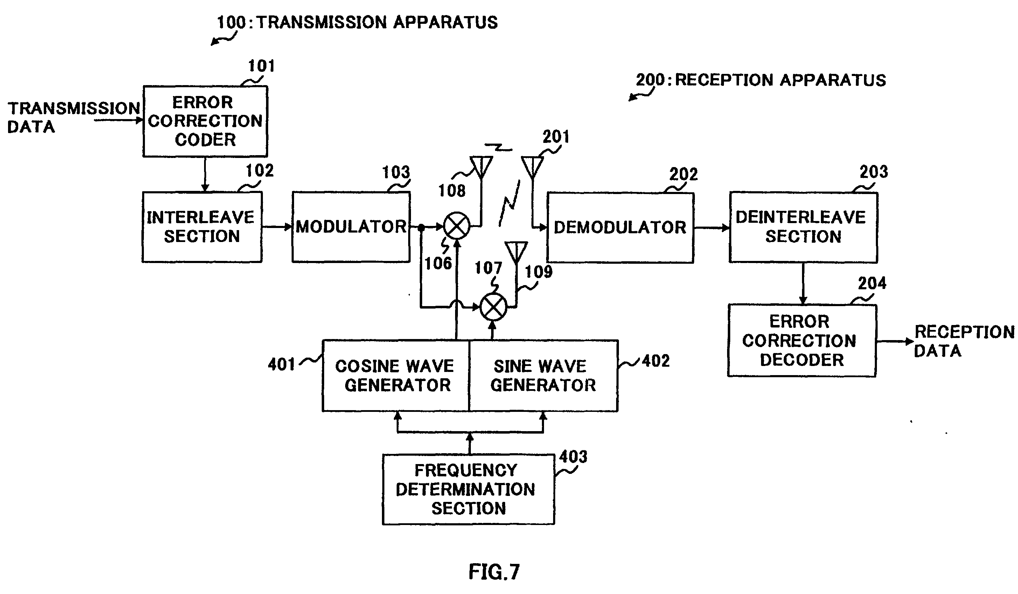

FIG. 7 is a block diagram indicating a configuration of a transmission apparatus and a reception apparatus concerning an embodiment 3 of the present invention. Further in the transmission apparatus and the reception apparatus indicated in FIG. 7, the same signs as FIG. 5 are added to the common configuration parts of FIG. 7 to omit the description.

In FIG. 7, a reception apparatus 200 is totally the same configuration as that of FIG. 5. In the meantime, a transmission apparatus 100 is additionally provided with a cosine wave generator 401, a sine wave generator 402, and a frequency determination section 403 instead of the time-variant factor generators 104, and 105, in addition to FIG. 5.

The cosine wave generator 401 generates cosine waves to output to the multiplier 106. The sine wave generator 402 generates sine waves to output to the multiplier 107. Further, the frequency determination section 403 controls frequency of the cosine wave so as to permit a frequency of the cosine waves generated by the cosine wave generator 401 to be a predetermined value. Also, the frequency determination section 403 controls frequency of the sine wave so as to permit a frequency of the sine waves generated by the sine wave generator 402 to be a predetermined value.

Consequently, the cosine wave of the predetermined frequency is multiplied by one of the branch signals at the multiplier 106. In the meantime, the sine wave of the predetermined frequency is multiplied by the other of the branch signals. According to the processing, amplitudes of the output signals of respective multipliers are changed temporally, and transmission levels of the respective antennas 108, and 109 are changed continuously.

For that reason, the pseudo-high-speed fading which is the same state as that of the high speed fading is produced, thus even though there is a limit on the interleave length, it is capable of exercising error correction effect sufficiently.

### (Embodiment 4)

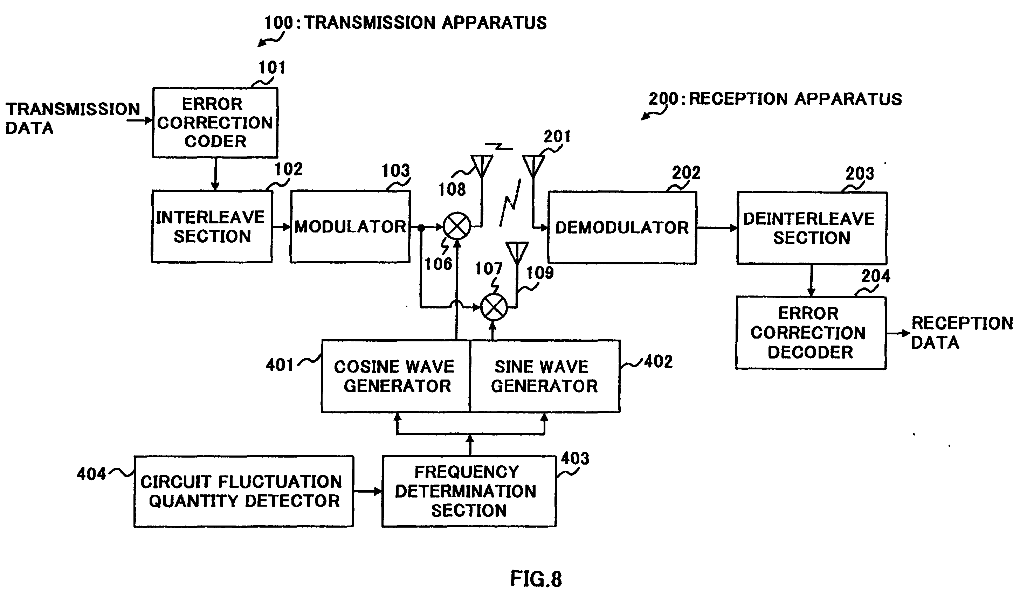

FIG. 8 is a block diagram indicating a transmission apparatus and a reception apparatus concerning an embodiment 4 of the present invention. In the transmission apparatus and the reception apparatus indicated in FIG. 8, the same signs as FIG. 7 are added to the common configuration parts of FIG. 8 to omit the description.

In FIG. 8, a reception apparatus 200 is totally the same configuration as that of above FIG. 7. In the meantime, a transmission apparatus 100 is additionally provided with a circuit fluctuation quantity detector 404 in addition to FIG. 7.

The circuit fluctuation quantity detector 404 detects circuit fluctuation quantities between the transmission apparatus 100 and the reception apparatus 200. The circuit fluctuation quantity detector 404 outputs the detected circuit fluctuation quantity (hereinafter referred to as detected circuit fluctuation quantity) to the frequency determination section 403.

The frequency determination section 403 executes control in such a way that when the detected circuit fluctuation quantity is large, the frequency determination section 403 causes the frequencies of both cosine wave and sine wave to be lowered, that are generated at the cosine wave generator 401 and sine wave generator 402, while when the detected circuit fluctuation quantity is small, the frequency determination section 403 causes the frequencies of both cosine wave and sine wave to be heightened.

Concretely, the apparatus of the present embodiment sets circuit fluctuation quantity (hereinafter referred to as targeted circuit fluctuation quantity) fDₜ as a target to the frequency determination section 403 beforehand. The frequency determination section 403 subtracts detected circuit fluctuation quantity fDₘ from the targeted circuit fluctuation quantity fDₜ. The frequency determination section causes the obtained values according to the subtraction to be set to frequency of the cosine wave generated from the cosine wave generator 401 and frequency of the sine wave generated from the sine wave generator 402 respectively.

Further, when the detected circuit fluctuation quantity fDₘ is not less than the targeted circuit fluctuation quantity fDₜ, since the condition is sufficient fading speed condition, the frequency determination section causes the cosine wave and the sine wave not to be generated. Furthermore, the targeted circuit fluctuation quantity fDₜ is determined in accordance with given depth of the interleave or so forth.

Thus, it is capable of producing fading condition with required speed in such a way that the apparatus of the present embodiment controls the frequency of the cosine wave and the sine wave multiplied by the transmission signal on the basis of the detected circuit fluctuation quantity, therefore, it is capable of staying deterioration on the occasion of the high speed circuit fluctuation.

### (Embodiment 5)

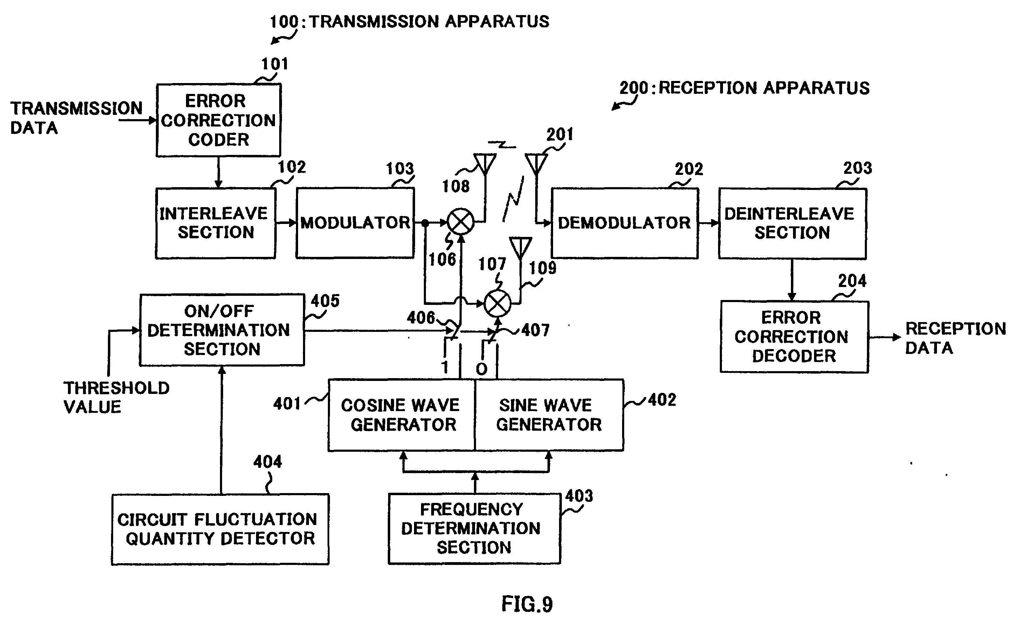

FIG. 9 is a block diagram indicating a configuration of a transmission apparatus and a reception apparatus concerning an embodiment 5 of the present invention. In the transmission apparatus and the reception apparatus indicated in FIG. 9, the same signs as FIG. 8 are added to the common configuration parts of FIG. 9 to omit the description.

In FIG. 9, a reception apparatus 200 is totally the same configuration as that of the above FIG. 8. In the meantime, a transmission apparatus 100 is additionally provided with an ON/OFF determination section 405, a first switch 406, and a second switch 407, in addition to FIG. 8.

In such the configuration, the circuit fluctuation quantity detector 404 detects circuit fluctuation quantity between the transmission apparatus 100 and the reception apparatus 200 to output detected circuit fluctuation quantity to the ON/OFF determination section 405. The ON/OFF determination section 405 causes data "1" and data "0" to be outputted while controlling the first switch 406 and the second switch 407 when the detected circuit fluctuation quantity is larger than predetermined threshold value.

According to this processing, since "1" is outputted to the multiplier 106, and "0" is outputted to the multiplier 107, only multiplication signal of the multiplier 106 is transmitted from the antenna 108. The reason for such control is that when the circuit fluctuation is fast, it is capable of generating fading with sufficient speed.

On the other hand, the ON/OFF determination section 405 causes the cosine wave generator 401 to the multiplier 106 as well as the sine wave generator 402 to the multiplier 107 to be connected while controlling the first switch 406 and the second switch 407 when the detected circuit fluctuation quantity is not more than predetermined threshold value, namely when the circuit fluctuation is not more than predetermined speed.

According to this processing, since the cosine wave is outputted to the multiplier 106, and the sine wave is outputted to the multiplier 107, amplitudes of the output signals of respective multipliers 106, and 107 are changed temporally, and transmission levels of the respective antennas 108, and 109 are changed continuously, therefore it is capable of producing condition of the high speed fading.

Thus, in the transmission apparatus, only when the detected circuit fluctuation quantity is not more than the predetermined threshold value, the transmission apparatus causes amplitudes of respective branch signals to be changed. According to this processing, it is capable of staying deterioration on the occasion of the high speed circuit fluctuation while producing condition of the high speed fading only the case where it is necessary, therefore it is capable of scheming reduction of dissipation power.

### (Embodiment 6)

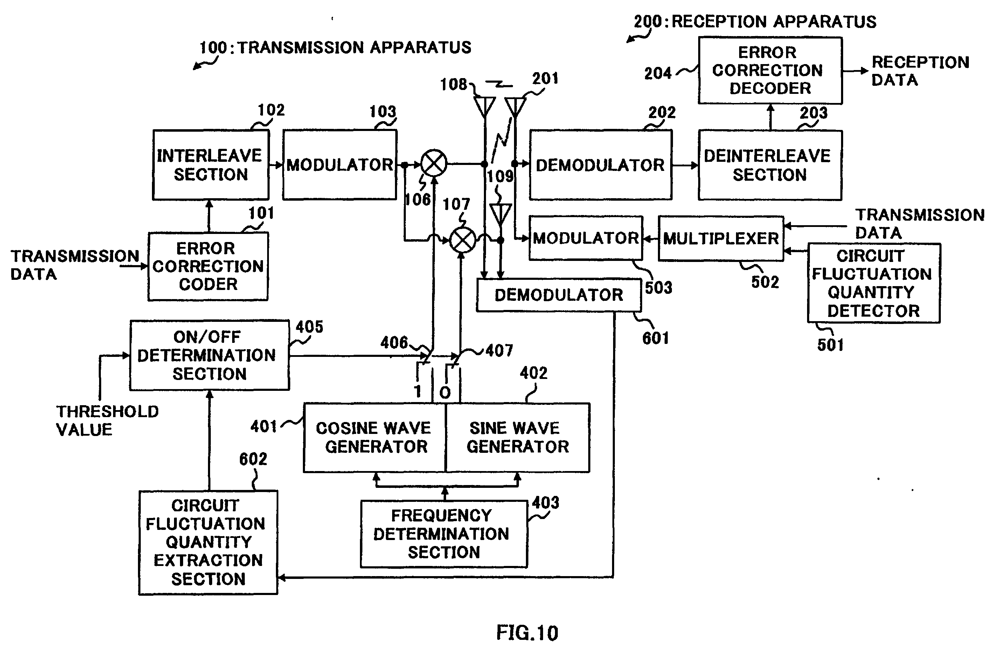

FIG. 10 is a block diagram indicating a configuration of a transmission apparatus and a reception apparatus concerning an embodiment 6 of the present invention. Further, in the transmission apparatus and the reception apparatus indicated FIG. 10, the same signs as FIG. 9 are added to the common configuration parts of FIG. 10 to omit the description.

In FIG. 10, a reception apparatus 200 is additionally provided with a circuit fluctuation quantity detector 501, a multiplexer 502, and a modulator 503 in addition to FIG. 9. In the meantime, a transmission apparatus 100 is additionally provided with a demodulator 601, and a circuit fluctuation quantity extraction section 602 instead of the circuit fluctuation quantity detector 404 in addition to FIG. 9.

In such the configuration, the circuit fluctuation quantity detector 501 detects circuit fluctuation quantity between the transmission apparatus 100 and the reception apparatus 200 to output detected circuit fluctuation quantity to the multiplexer 502.

The multiplexer 502 multiplexes the detected circuit fluctuation quantity onto the transmission data before outputting to the modulator 503. The modulator 503 modulates radio frequency signal with the output signal of the multiplexer 502, before transmitting to the transmission apparatus 100 through the antenna 201.

The demodulator 601 of the transmission apparatus 100 demodulates signals received by respective antennas 108, and 109 to output to the circuit fluctuation quantity extraction section 602. The circuit fluctuation quantity extraction section 602 extracts detected circuit fluctuation quantity included in the output signal of the demodulator 601 to output to the ON/OFF determination section 405.

The ON/OFF determination section 405 executes similar control to the embodiment 5 to the first switch 406 and the second switch 407 on the basis of the detected circuit fluctuation quantity extracted at the circuit fluctuation quantity extraction section 602.

According to this processing, in the FDD system whose uplink is different from downlink thereof, the transmission apparatus is capable of controlling whether or not the transmission apparatus permits the amplitudes of the respective branch signals to be changed on the basis of the detected circuit fluctuation quantity. Thus, the transmission apparatus produces the condition of the high speed fading only the case where it is necessary to stay deterioration on the occasion of the high speed circuit fluctuation. Thus, it is capable of scheming reduction of dissipation power.

### (Embodiment 7)

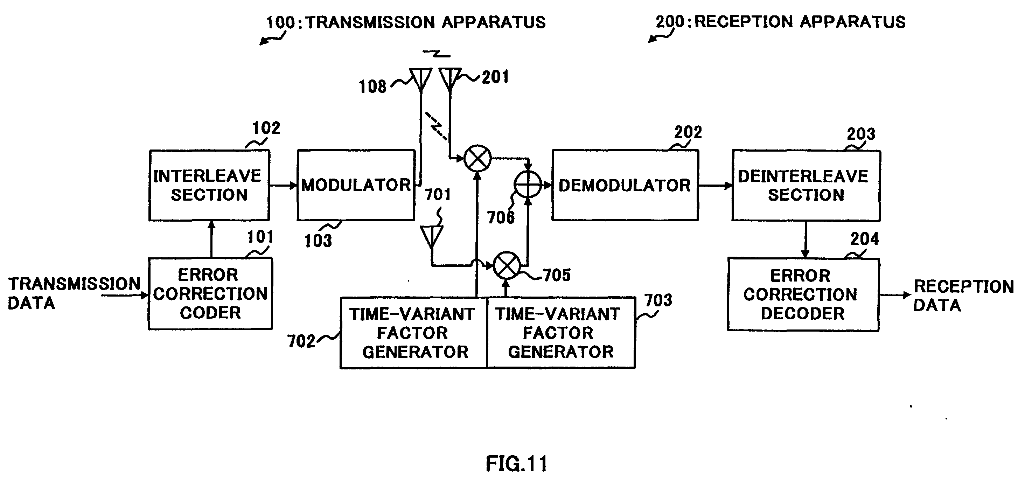

FIG. 11 is a block diagram indicating a transmission apparatus and a reception apparatus concerning an embodiment 7 of the present invention. In the transmission apparatus and the reception apparatus indicated in FIG. 11, the same signs as that of FIG. 5 are added to the common configuration parts of FIG. 11 to omit the description.

In FIG. 11, a transmission apparatus 100 is configured in such a way that the time-variant factor generators 104, and 105, the multipliers 106, and 107, and the antenna 108 are deleted from the configuration indicated in FIG. 5. In the meantime, a reception apparatus 200 is additionally provided with an antenna 701, time-variant factor generators 702, and 703, multipliers 704, and 705, and an adder 706.

In such the configuration, the transmission apparatus 100 transmits output signals of the modulator 103 from the antenna 108 without branching the output signals. Further, the reception apparatus 200 receives signals transmitted from the transmission apparatus 100 with the antenna 201, before the multiplier 704 multiplies the reception signal by the time-variant factor generated from the time-variant factor generator 702. In the same way as above multiplication, the reception apparatus 200 also receives signal with the antenna 701, before the multiplier 705 multiplies the reception signal by the time-variant factor generated from the time-variant factor generator 703 at the multiplier 705.

The respective time-variant factors are multiplied by the respective signals, thereby the apparatus of the present embodiment enables amplitudes of respective reception signals to be changed, therefore, the reception signal level is changed continuously, with the result that the condition of the high speed fading is produced.

Further, the reception apparatus 200 causes the output signals of respective multipliers 704, and 705 to be added at the adder 706, before causing the output signals to be demodulated at the demodulator 302. Subsequently, the reception apparatus 200 causes the output signals to be performed deinterleave processing at the deinterleave section 203, before causing the output signals to be subjected to error correction processing at the error correction demodulator 204 to take the reception data out.

Thus, even though the fading is low speed, the pseudo-high-speed fading that is the same condition as that of the high speed fading can be produced, and also even though there is a limit in the interleave length, it is capable of exercising error correction effect sufficiently. Further, if the apparatus stays speed of fluctuation according to the time-variant factor in some degrees, there is scarcely any deterioration caused by the high speed circuit fluctuation.

Furthermore, since antenna switching, and/or frequency switching is not executed, signals received by the reception apparatus become continuous signals, thus, it is capable of employing the result of the previous slots on the occasion that the AGC and/or the circuit estimation is performed.

Moreover, there are problems to be solved in the transmission diversity. Namely, when transmission switching diversity is performed, selection of the optimum branch is difficult in FDD (Frequency Division Duplex), in particular, whose reverse frequency is different from forward frequency. Furthermore, in the transmission switching diversity, the transmission antenna is switched. There are problems that the switching of the transmission antenna causes burden of ramp control, lowering of transmission efficiency caused by guarded time insertion, performance deterioration of coherent detection in which a plurality of slots of pilot signal are employed in the reception side, and so forth. The present embodiment is capable of resolving these problems.

Still moreover, in the present embodiment, since the radio section is sufficient only one system, the apparatus is capable of being miniaturized in comparison with usual reception diversity configuration which requires 2-system radio section, therefore, in particular, it is useful when transmission side is a mobile station.

### (Embodiment 8)

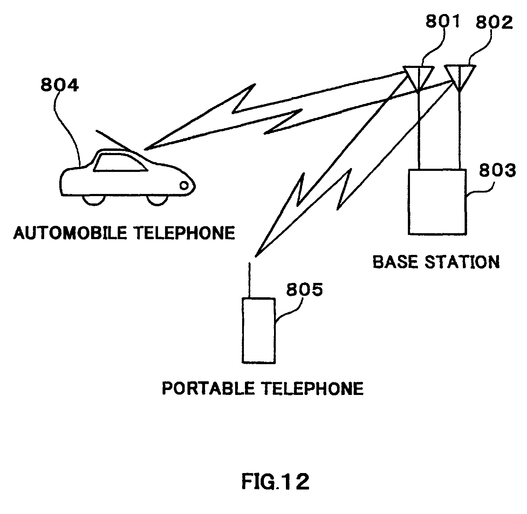

Hereinafter, there will be described about a mobile communication system including a base station composed to be configured characteristic configurations of the embodiments 1 to 6 arbitrarily and a mobile station of a land mobile radiotelephone as well as a portable telephone referring to FIG. 12 to FIG. 14.

FIG. 12 is a conception view indicating a configuration of mobile communication system including a base station with two antennas 801, and 802, and a land mobile radiotelephone 804 and a portable telephone 805.

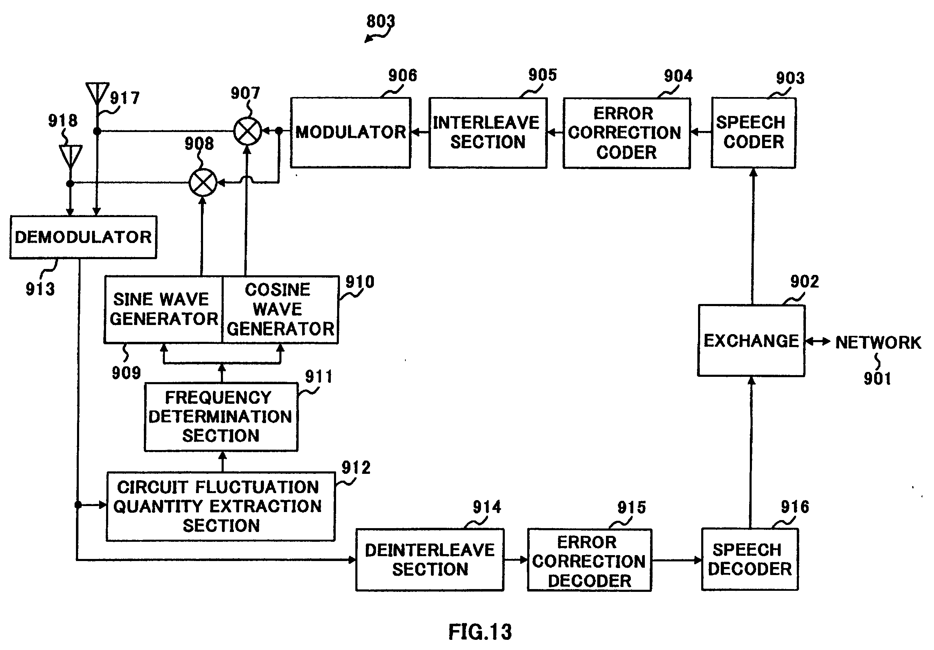

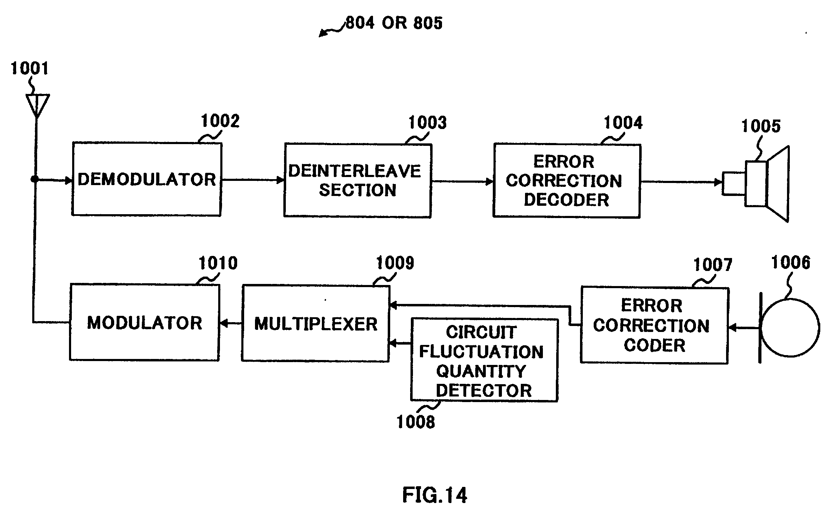

Further, FIG. 13 is a block diagram indicating a configuration of the base station 803 indicated in FIG. 12. FIG. 14 is a block diagram indicating a configuration of the land mobile radiotelephone 804 or the portable telephone 805.

As indicated in FIG. 13, the base station 803 is provided with an exchange 902 which performs message exchange of signals between the base station 803 and a network 901.

Further, the base station 803 includes a speech coder 903, an error correction coder 904, an interleave section 905, a modulator 906, multipliers 907, and 908, a sine wave generator 909, a cosine wave generator 910, a frequency determination section 911, and circuit fluctuation quantity extraction section 912, by way of transmission list.

Furthermore, the base station 803 includes a demodulator 913, a deinterleave section 914, an error correction decoder 916, and a speech decoder 916, by way of reception list.

Moreover, usually, the base station 803 is provided with a plurality of transmission systems as well as reception systems, however, in order to simplify description, FIG. 13 indicates only each one system of the transmission system as well as the reception system.

Further, the base station 803 is provided with antennas 917, and 918 for transmitting multiplication result of respective transmission systems and for receiving signals transmitted from the land mobile radiotelephone 804 and the portable telephone 805.

As indicated in FIG. 14, the land mobile radiotelephone 804 or the portable telephone 805 is provided with an antenna 1001, a demodulator 1002, a deinterleave section 1003, an error correction decoder 1004, a loudspeaker 1005, a microphone 1006, an error correction coder 1007, a circuit fluctuation quantity detector 1008, a multiplexer 1009, and a modulator 1010.

In such the configuration, the circuit fluctuation quantity detector 1008 of the portable telephone 805 detects circuit fluctuation quantity between the base station 803 and the portable telephone 805.

The multiplexer 1009 multiplexes the circuit fluctuation quantity outputted from the circuit fluctuation quantity detector 1008 onto the speech data from the microphone 1006 that is coded at the error correction coder 1007. The modulator 1010 modulates the signal multiplexed in the multiplexer 1009 into radio frequency. The modulated signal is transmitted to the base station 803 through the antenna 1001.

The signals received by respective antennas 917, and 918 of the base station 803 are demodulated at the demodulator 913, before being outputted to the circuit fluctuation quantity extraction section 912.

The circuit fluctuation quantity extraction section 912 extracts circuit fluctuation quantity included in the demodulated signals. The frequency determination section 911 performs control of determining frequency of the cosine wave and the sine wave generated from the sine wave generator 909 and the cosine wave generator 910.

Further, the cosine wave and the sine wave of the frequency determined in accordance with the control of the frequency determination section 911 are outputted to the multipliers 907, and 908.

Furthermore, the speech signals outputted from the exchange 902 are subjected to speech coding at the speech coder 903. The speech signals are then subjected to error correction coding at the error correction coder 903. Subsequently, the speech signals are subjected to interleave processing at the interleave section 905. Further, the speech signals are modulated at the modulator 906, before being subjected to 2-branching into two speech signals, thus being outputted to the multipliers 907, and 908.

The multipliers 907, and 908 multiply the cosine wave as well as the sine wave and the modulated signal by the branch signals. The output signals of the multipliers 907, and 908 are outputted to the portable telephone 805 through respective antennas 917, and 918.

As is clear from above description, according to the present invention, it is capable of ensuring required error correction performance under low speed fading condition and limited interleave length, and it is capable of overcoming the problems included in the transmission switching diversity so that the whole apparatus does not become large size, and without bringing increase of the dissipation power.

The present description is based on the Japanese Patent Application No. HEI 11-93984 applied on March 31, 1999, and the Japanese Patent Application No. HEI 11-275845 applied on September 29, 1999. The content thereof is included in the description.

## Claims

1. A transmission apparatus comprising:
error correction coding means for performing error correction coding of a transmission data;
interleave means for perforating interleave processing of data which is subjected to said error correction coding;
modulation means for modulating radio frequency depending on data which is subjected to said interleave processing;
branching means for branching modulated signal into a plurality of signals; and
amplitude control means for transmitting signals in such away that said amplitude control means changes amplitudes of respective branched signals temporally to transmit from transmission antennas whose number corresponds to the number of said branching.

2. A transmission apparatus according to claim 1, wherein said amplitude control means multiplies respective time-variant factors by respective signals outputted from said branching means.

3. A transmission apparatus according to claim 2, wherein there is provided calculation means for calculating to be controlled the time-variant factors so that the total of respective different time-variant factors becomes fixed value, before outputting respective controlled time-variant factors to the amplitude control means.

4. A transmission apparatus according to claim 1, wherein said amplitude control means multiplies cosine wave and sine wave of predetermined frequency by respective signals outputted from said branching means.

5. A transmission apparatus according to claim 4, wherein there is provided circuit fluctuation quantity detection means for detecting circuit fluctuation quantity between transmission and reception, when said circuit fluctuation quantity is large, said amplitude control means causes frequencies of the cosine wave and the sine wave to be lowered, while when said circuit fluctuation quantity is small, said amplitude control means causes frequencies of the cosine wave and the sine wave to be heightened.

6. A transmission apparatus according to claim 5, wherein said amplitude control means subtracts circuit fluctuation quantity detected by said circuit fluctuation quantity detection means from targeted circuit fluctuation quantity set beforehand, then obtained such subtracted value is taken to be frequency of cosine wave and sine wave.

7. A transmission apparatus according to claim 6, wherein said amplitude control means, when the circuit fluctuation quantity detected by said circuit fluctuation quantity detection means is not less than targeted circuit fluctuation quantity, causes the cosine wave and the sine wave not to be generated.

8. A transmission apparatus according to claim 4, wherein there is provided circuit fluctuation quantity detection means for detecting circuit fluctuation quantity between transmission and reception, when detected said circuit fluctuation quantity is larger than predetermined threshold value, said amplitude control means transmits only one signal of respective signals outputted from the branching means from one antenna without changing amplitude, while when said circuit fluctuation quantity is not more than said threshold value, said amplitude control means multiplies the cosine wave and the sine wave of predetermined frequency by respective branching signals.

9. A transmission apparatus according to claim 4, wherein there is provided circuit fluctuation quantity extraction means for extracting circuit fluctuation quantity from signals transmitted from communication partner, when detected said circuit fluctuation quantity is larger than predetermined threshold value, said amplitude control means transmits only one signal of respective signals outputted from the branching means from one antenna without changing amplitude, while when said circuit fluctuation quantity is not more than said threshold value, said amplitude control means multiplies the cosine wave and the sine wave of predetermined frequency by respective branching signals.

10. A reception apparatus comprising:
multiplication means for multiplying respective different time-variant factors which are changed temporally by respective signals received by a plurality of antennas whose number corresponds to the number of said plurality of antennas;
addition means for adding respective signals after multiplication according to this multiplication means;
demodulation means for demodulating said added signals;
deinterleave means for performing deinterleave processing to said demodulated signals; and
error correction decoding means for performing error correction decoding processing of signals which are subjected to said interleave processing.

11. A base station apparatus mounted with a transmission apparatus wherein said transmission apparatus comprises:
error correction coding means for performing error correction coding of a transmission data;
interleave means for performing interleave processing of data which is subjected to said error correction coding;
modulation means for modulating radio frequency depending on data which is subjected to said interleave processing;
branching means for branching modulated signal into a plurality of signals; and
amplitude control means for transmitting signals in such away that said amplitude control means changes amplitudes of respective branched signals temporally to transmit from transmission antennas whose number corresponds to the number of the branching.

12. A base station apparatus mounted with a reception apparatus wherein said reception apparatus comprises:
multiplication means for multiplying respective different time-variant factors which change temporally by respective signals received by a plurality of antennas, whose number corresponds to the number of said plurality of antennas;
addition means for adding respective signals after multiplication according to this multiplication means;
demodulation means for demodulating said added signals;
deinterleave means for performing deinterleave processing to said demodulated signals; and
error correction decoding means for performing error correction decoding processing of signals which is subjected to said interleave processing.

13. A transmission method comprising the steps of:
performing error correction coding of signal;
performing interleave processing of said signal;
branching said signal into a plurality of signals;
multiplying branched respective signals by respective different time-variant factors which are changed temporally; and
transmitting above-processed transmission signals from a plurality of antennas.

14. A transmission method comprising the steps of:
performing error correction coding of signal;
performing interleave processing of said signal;
branching said signal into a plurality of signals;
multiplying branched respective signals by cosine wave and sine wave of predetermined frequency; and
transmitting above-processed transmission signals from a plurality of antennas.

15. A transmission method according to claim 14, wherein there is provided circuit fluctuation quantity detection step for detecting circuit fluctuation quantity, when detected said circuit fluctuation quantity is larger than predetermined threshold value, only one signal of respective branched signals is transmitted from one antenna, while when said circuit fluctuation quantity is not more than said threshold value, the cosine wave and the sine wave are multiplied by respective branched signals to be transmitted from a plurality of antennas.

16. A transmission method according to claim 14, there is provided circuit fluctuation quantity extraction step for extracting circuit fluctuation quantity from reception signals that is detected by communication partner, when detected said circuit fluctuation quantity is larger than predetermined threshold value, only one signal of respective branched signals is transmitted from one antenna, while when said circuit fluctuation quantity is not more than said threshold value, the cosine wave and the sine wave are multiplied by respective branched signals to be transmitted from a plurality of antennas.

17. A reception method comprising the steps of:
multiplying respective different time-variant factors which are changed temporally by signals received through a plurality of antennas;
adding above-processed signals;
demodulating above-added signals;
performing deinterleave processing of the demodulated signals; and
performing error correction decoding processing of the above signals.
